# EUROPÄISCHE PATENTSCHRIFT

(11) **EP 1 145 591 B1**
(45) Veröffentlichungstag und Bekanntmachung des Hinweises auf die Patenterteilung: **05.03.2008**
(21) Anmeldenummer: 00904911.5
(22) Anmeldetag: 13.01.2000
(51) Int. Cl.: H04Q 11/04

(54) **RESERVIERUNGSVERFAHREN IN DIGITALEN DATENÜBERTRAGUNGSNETZEN UND DATENVERMITTLUNGSSTELLE**
RESERVATION METHOD FOR DIGITAL DATA TRANSMISSION NETWORKS AND DATA SWITCHING CENTRE
PROCEDE DE RESERVATION DANS DES RESEAUX NUMERIQUES DE TRANSMISSION DE DONNEES, ET CENTRE DE COMMUTATION DE DONNEES

(30) Priorität: 18.01.1999 EP 99101001
(43) Veröffentlichungstag der Anmeldung: 17.10.2001
(73) Patentinhaber: Nokia Siemens Networks GmbH & Co. KG, 81541 München (DE)
(72) Erfinder: GROSSMANN, Bernd, D-82041 Deisenhofen (DE)
(86) Internationale Anmeldenummer: PCT/EP2000/000243
(87) Internationale Veröffentlichungsnummer: WO 2000/042812

(56) Entgegenhaltungen:
- EP-A- 0 388 951
- EP-A- 0 798 942
- WO-A-97/22224

## Beschreibung

Die Erfindung betrifft ein Verfahren zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate, wobei eine bestimmte Übertragungskapazität zur Verfügung steht, die kleiner oder gleich der maximalen Übertragungsrate ist, wobei weiterhin bestimmte Bandbreiten oder Bandbreitengruppen bestimmte Datenübertragungsraten in Benutzung haben, für bestimmte Bandbreiten oder Bandbreitengruppen bᵢ bestimmte Datenübertragungsraten rᵢ reserviert werden, und eine Anforderung zur Übertragung von Daten mit einer bestimmten Bandbreite oder Bandbreitengruppe bⱼ nur dann angenommen wird, wenn vorgegebene Kriterien bezüglich der Auslastung des Datennetzes erfüllt werden. Außerdem betrifft die Erfindung eine Datenvermittlungsstelle.

Im Rahmen digitaler Datenübertragungsnetzwerke, wie bei digitalen drahtgebundenen Telekommunikationsnetzen, Mobilfunknetzen oder ATM-Netzen, besteht das Problem einer sinnvollen Aufteilung der gesamten Datenübertragungskapazität auf verschiedene Dienste unterschiedlicher Bandbreite. Ein Beispiel hierfür ist das ISDN (Integrated Services Digital Network), welches parallel Sprachdatenverkehr mit 1x64kbit/s, reinen Datenverkehr mit 128kbit/s=2x64kbit/s und Videosignale mit 384kbit/s=6x64kbit/s überträgt. Wählen sich gleichzeitig mehrere Nutzer für die einzelnen Dienste ein, so muß ein Entscheidungskriterium vorliegen, nach dem die Anforderungen zur Datenübertragung der Nutzer geregelt werden und die gesamte Datenübertragungskapazität auf die Dienste und innerhalb der Dienste unterschiedlicher Bandbreite verteilt wird.

Es liegt auf der Hand, daß die Art der Verteilung der Datenübertragungskapazität auf die einzelnen Dienste ein wesentliches Kriterium für die Effektivität und Betriebssicherheit des Datennetzes darstellt. Durch das Verteilungskriterium soll erreicht werden, daß das Netz:
- effektiv und mit geringer Blockierungswahrscheinlichkeit auch am Rande seiner Auslegungskapazität arbeiten soll
- flexibel auf unterschiedliche Lastanforderungen unterschiedlicher Bandbreiten reagieren soll
- sich stabil bei kleinen Abweichungen gegenüber seiner Auslegungskapazität verhalten soll
- eine große Überlast bei einer Bandbreite keine Blockierung anderer Bandbreiten auslösen soll
- sowohl Bandbreiten unterschiedlicher Größe annähernd chancengleich behandelt werden sollen ("fairness") und
- die Verwaltung des Datenverkehrs einfach sein soll.

Um die oben genannten Kriterien weitgehend zu erfüllen, können unterschiedliche Verteilungskriterien und Algorithmen verwendet werden.

Beispielsweise können jeder Bandbreite eindeutig bestimmte Übertragungskanäle zugeordnet werden. Hierdurch wird jegliche Blockade einer Bandbreite durch eine andere Bandbreite unterbunden. Der Nachteil ist hierbei, daß keinerlei Flexibilität zur Aufteilung der Übertragungskapazität besteht und damit bei wechselnden Anforderungen eine uneffektive Arbeitsweise entsteht.

Eine andere Möglichkeit besteht darin, daß die gesamte Übertragungskapazität allen Bandbreiten uneingeschränkt bis zur Kapazitätsgrenze zur Verfügung steht. Hierdurch kann zwar eine optimale Auslastung erreicht werden, jedoch besteht die Möglichkeit, daß die Übertragung einzelner Bandbreiten durch die starke Nutzung des Datennetzes durch andere Bandbreiten blockiert wird. Wird in einer Verbesserung dieses Verfahrens jeder einzelnen Bandbreite eine maximale Kapazität reserviert, so führt dies zu einem guten Schutz gegen Blockierungen zwischen den Bandbreiten, jedoch zu geringer Effizienz des Systems.

Eine weitere Möglichkeit liegt darin, die gesamte Übertragungskapazität grundsätzlich allen Bandbreiten zur Verfügung zu stellen, aber Anforderungen zur Datenübertragung einer bestimmten Bandbreite zu unterbinden, sobald die gesamte freie Datenübertragungskapazität einen bestimmten Schwellenwert unterschreitet. Diese Methode wird "sum limitation" oder "trunk reservation" genannt und wird meistens zusammen mit Prioritätszuweisungen für bestimmte Anforderungen verwendet. Der Nachteil dieser Methode liegt darin, daß auch bei hohen Überlasten bestimmter Bandbreiten weiterhin Reservierungen aufrecht erhalten werden und dadurch freie Kapazität verschwendet wird. Hierdurch ergeben sich höhere Blockierungswahrscheinlichkeiten für die jeweils anderen Bandbreiten.

Eine der Erfindung ähnliche Methode zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate ist aus der Europäischen Patentanmeldung EP 0 449 480 A3 bekannt. In dieser Schrift wird vorgeschlagen eine Anforderung zur Übertragung von Daten mit einer bestimmten Bandbreite bⱼ nur dann anzunehmen, wenn vorgegebene Kriterien bezüglich der Auslastung des Datennetzes erfüllt sind. Hierbei werden diverse Kriterien vorgeschlagen, die sich alle auf eine dynamisch variierende, gesamte reservierte Datenübertragungskapazität beziehen.

Des weiteren wird auf die Europäische Patentanmeldung EP 0 798 942 A2 verwiesen, in der ein Verfahren zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate bₘₐₓ, wobei
- eine bestimmte Übertragungskapazität zur Verfügung steht, die kleiner oder gleich der maximalen Übertragungsrate bₘₐₓ ist,
- bestimmte Bandbreiten oder Bandbreitengruppen bᵢ Datenübertragungsraten sᵢ in Benutzung haben,
- für bestimmte Bandbreiten oder Bandbreitengruppen bᵢ bestimmte Datenübertragungsraten rᵢ reserviert werden,
- eine Anforderung zur Übertragung von Daten mit einer bestimmten Bandbreite oder Bandbreitengruppe bⱼ nur dann angenommen wird, wenn vorgegebene Kriterien bezüglich der Auslastung des Datennetzes erfüllt werden,
- bei dem eine Anforderung zur Übertragung von Daten mit einer bestimmten Bandbreite bⱼ nur dann angenommen wird, wenn die nicht genutzte Datenübertragungskapazität auch nach der Annahme der Übertragung größer oder gleich der Summe der reservierten Datenübertragungsraten mit Ausnahme der reservierten Datenübertragungsrate rⱼ für die anfordernde Bandbreite oder Bandbreitengruppe bⱼ ist.

Es ist Aufgabe der Erfindung ein weiteres Verfahren zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate mit einem verbesserten und vereinfachten Kriterium für die Annahme oder Ablehnung einer Anforderung zur Datenübertragung anzugeben. Es ist weiterhin Aufgabe der Erfindung eine Datenvermittlungsstelle anzugeben, welche einen verbesserten Algorithmus für die Annahme oder Ablehnung einer Anforderung zur Datenübertragung aufweist.

Demgemäß schlägt der Erfinder vor, das bekannte Verfahren zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate, bei dem eine bestimmte Übertragungskapazität zur Verfügung steht, die kleiner oder gleich der maximalen Übertragungsrate ist, weiterhin bestimmte Bandbreiten oder Bandbreitengruppen bestimmte Datenübertragungsraten in Benutzung haben, für bestimmte Bandbreiten oder Bandbreitengruppen bᵢ bestimmte Datenübertragungsraten rᵢ reserviert werden, eine Anforderung zur Übertragung von Daten mit einer bestimmten Bandbreite oder Bandbreitengruppe bⱼ nur dann angenommen wird, wenn vorgegebene Kriterien bezüglich der Auslastung des Datennetzes erfüllt werden, und weiterhin eine Anforderung zur Übertragung von Daten mit einer bestimmten Bandbreite bⱼ nur dann angenommen wird, wenn die nicht genutzte Datenübertragungskapazität auch nach der Annahme der Übertragung größer oder gleich der Summe der reservierten Datenübertragungsraten mit Ausnahme der reservierten Datenübertragungsrate rⱼ für die anfordernde Bandbreite oder Bandbreitengruppe bⱼ ist, dahingehend zu verbessern, daß:
- für n Bandbreiten oder Bandbreitengruppen bᵢ (mit i= 1 bis n) bestimmte Datenübertragungsraten rᵢ (mit i= 1 bis n) reserviert werden,
- Schwellenwerte pᵢ (mit i= 1 bis n) für jede bestimmte Bandbreite oder Bandbreitengruppe bᵢ festgelegt werden,
- die Belastung sᵢ des Datenübertragungsnetzes bezüglich der einzelnen Bandbreiten bᵢ beobachtet wird, wobei
- bei einer Überschreitung einer Belastung sⱼ des Schwellwertes pⱼ (mit j Element der Werte i) der Bandbreite oder Bandbreitengruppe bⱼ die Reservierung von Datenübertragungsraten rⱼ für diese Bandbreite oder Bandbreitengruppe bⱼ aufgehoben wird, und
- die Anforderung zur Übertragung von Daten mit dieser bestimmten Bandbreite oder Bandbreitengruppe bⱼ nur dann akzeptiert wird, wenn die dann zur Verfügung stehende nicht belegte Datenübertragungskapazität auch nach der Annahme der Anforderung noch alle Reservierungen rₖ (mit k= 1 bis j-1 und j+1 bis n) aller übrigen Bandbreiten oder Bandbreitengruppen bₖ mit nicht aufgehobenen Reservierungen erfüllen kann.

Eine vorteilhafte Ausgestaltung des Verfahrens kann darin bestehen, daß die reservierten Datenübertragungsraten rᵢ ganzzahlige Vielfache (mit rᵢ=n*bi und n=0,1,2,...) der jeweiligen Bandbreiten oder der größten Bandbreite der jeweiligen Bandbreitengruppe bᵢ sind. Durch diese Maßnahme wird erreicht, daß keine unnötige Kapazität bei den reservierten Datenübertragungsraten rᵢ verschwendet wird.

Eine andere Verbesserung des erfindungsgemäßen Gedankens besteht darin, daß zumindest für eine Bandbreite bᵢ ein zweiter Schwellenwert ppᵢ bestimmt wird, der kleiner als der erste Schwellenwert pᵢ ist, und bei Erreichen dieses Schwellenwertes ppᵢ der genutzten Datenübertragungslast sᵢ der Wert der reservierten Datenübertragungskapazität rᵢ reduziert wird.

Entsprechend den derzeitigen Datenübertragungsstandards ist es vorteilhaft, wenn die Bandbreiten bᵢ als ganzzahlige Vielfache von 64kbit/s (Nx64kbit/s) angenommen werden.

Das erfindungsgemäße Verfahren kann vorteilhaft in einem digitalen Telekommunikationsnetz, insbesondere einem ISDN-Netz, einem digitalen Mobilfunknetz, oder auch in einem ATM-Netz (ATM=asynchronous transfer mode) angewendet werden.

Erfindungsgemäß wird auch eine Datenvermittlungsstelle vorgeschlagen, die zur Lösung der Aufgabe der Erfindung Mittel aufweist, welche das oben dargestellte Verfahren durchführen. Diese Mittel bestehen im wesentlichen aus Mikroprozessor gesteuerten Vermittlungseinrichtungen, deren Programmierung Algorithmen nach dem erfindungsgemäßen Verfahren aufweist.

Weitere Ausgestaltungen, zusätzliche Merkmale und Vorteile der Erfindung ergeben sich aus der nachfolgenden Beschreibung eines bevorzugten Ausführungsbeispiels unter Bezugnahme auf die Zeichnungen und aus den Unteransprüchen.

Die Erfindung soll nachfolgend, anhand der Zeichnung, näher erläutert werden.

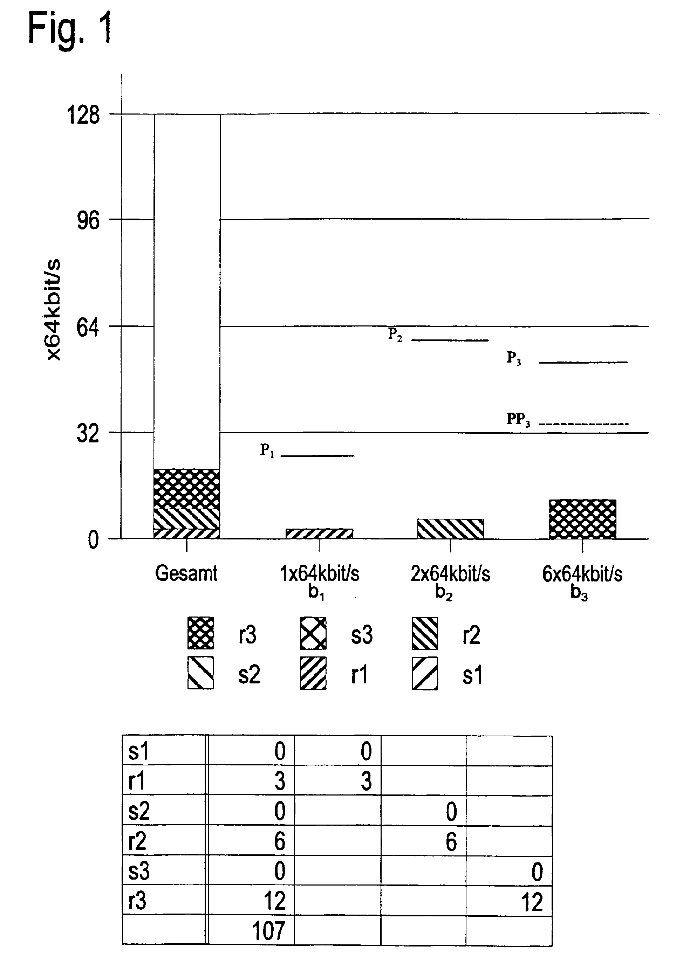

Figur 1-6: Schematische Darstellung unterschiedlicher Lastsituationen eines Datenübertragungsnetzes.

Die Figur 1 zeigt schematisch die Auslastungs- und Reservierungssituation einer Datenübertragungsstrecke, bei der kein Datenverkehr stattfindet. Auf der Ordinate ist die Datenübertragungskapazität in ganzzahligen Vielfachen von 64kbit/s aufgetragen und auf der Abszisse ist in einem Balkendiagramm die gesamte Kapazität des Datenübertragungssystemes gezeigt, wobei innerhalb der Gesamtkapazität die einzelnen reservierten Datenübertragungskapazitäten r₁ bis r₃ schraffiert dargestellt sind. Rechts daneben sind die von den einzelnen Bandbreiten b₁ bis b₃ genutzten und reservierten Übertragungskapazitäten, aufgestellt.

Beispielhaft sind nochmals getrennt drei Brandbreiten b₁ mit einmal 64kbit/s, b₂ mit zweimal 64kbit/s und b₃ mit sechsmal 64kbit/s gezeigt. Da im vorliegenden Falle kein Datenverkehr stattfindet, bestehen die Balken über den entsprechenden Bandbreiten jeweils nur aus der reservierten Datenübertragungskapazität r₁ bis r₃. Zusätzlich sind, den entsprechenden Bandbreiten zugeordnet, die Höhe der festgelegten Schwellwerte p₁ bis p₃ und zur Bandbreite b₃ der zweite Schwellenwert pp₃ eingezeichnet.

Außerdem sind in dieser und in allen anderen Figuren die Schraffurbeziehungen und darunter in einer Tabelle die Zahlenwerte der korrespondierenden Balken dargestellt.

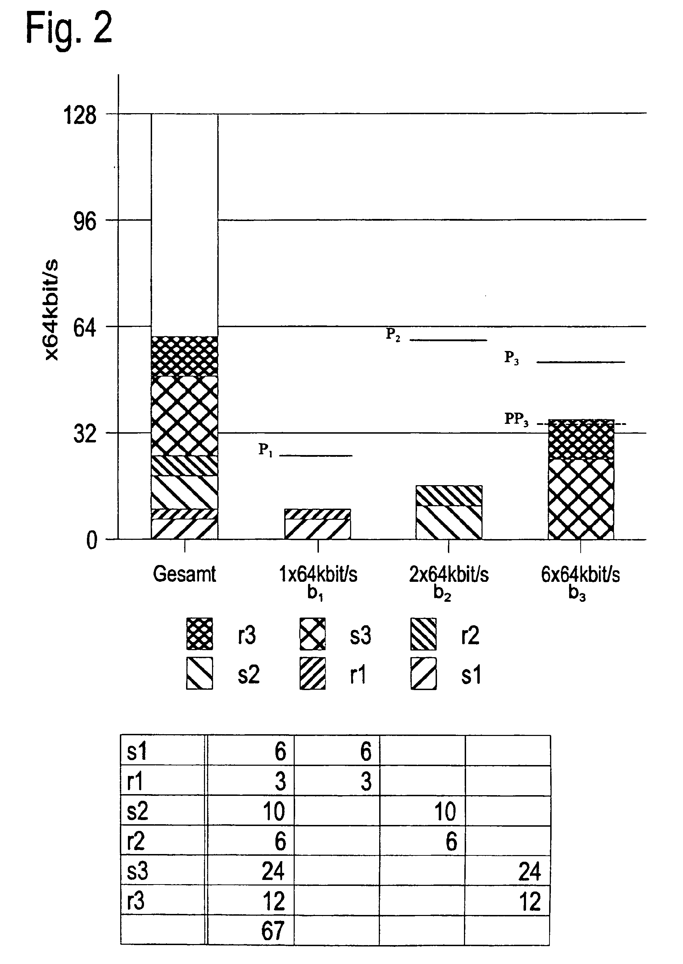

Die Figur 2 zeigt eine Lastsituation des Datenübertragungsnetzes mit geringer Last. Der linke Balken zeigt die gesamte Datenübertragungskapazität mit ihrer Aufteilung in die genutzten Bereiche s₁ bis s₃ und die reservierten Bereiche r₁ bis r₃ der einzelnen Bandbreiten und eine zusätzlich freie Datenübertragungskapazität, die für alle zur Verfügung steht. Auf der rechten Seite sind die entsprechenden Aufteilungen den einzelnen Bandbreiten b₁ bis b₃ zugeordnet. In den Bandbreiten sind jeweils die einzelnen genutzten Datenübertragungskapazitäten s₁ bis s₃ dargestellt und die zur jeweiligen Bandbreite zugeordnete, reservierte Datenübertragungskapazität r₁ bis r₃. Außerdem sind die vorgegebenen Schwellwerte p₁ bis p₃ für die einzelnen Bandbreiten angegeben. Zusätzlich ist auch noch bei der Bandbreite b₃ ein zweiter Schwellwert pp₃ dargestellt, ab dem sich die reservierte Datenübertragungskapazität dieser Bandbreite verringert. Alle Bandbreiten sind relativ gering ausgelastet, so daß die Summe der reservierten Bandbreiten r₁ bis r₃ wesentlich kleiner als die freie, allen Bandbreiten zugängliche Datenübertragungskapazität ist. In keiner Bandbreite ist die Schwelle pᵢ erreicht und kein Schutzmechanismus ist in Kraft. Neue Anforderungen zur Datenübertragung können also ohne Einschränkung angenommen werden.

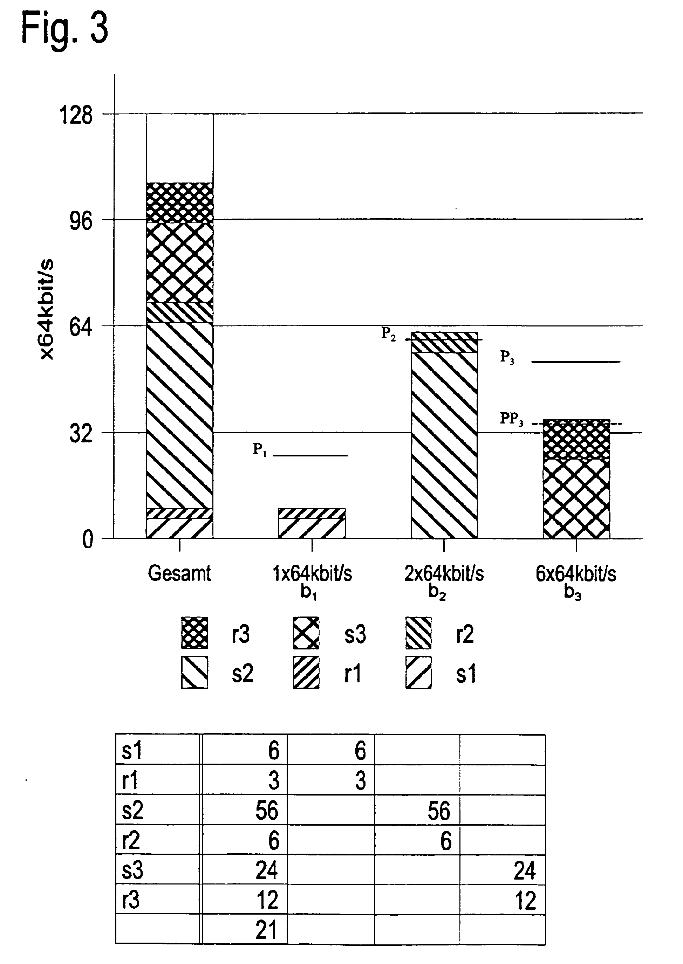

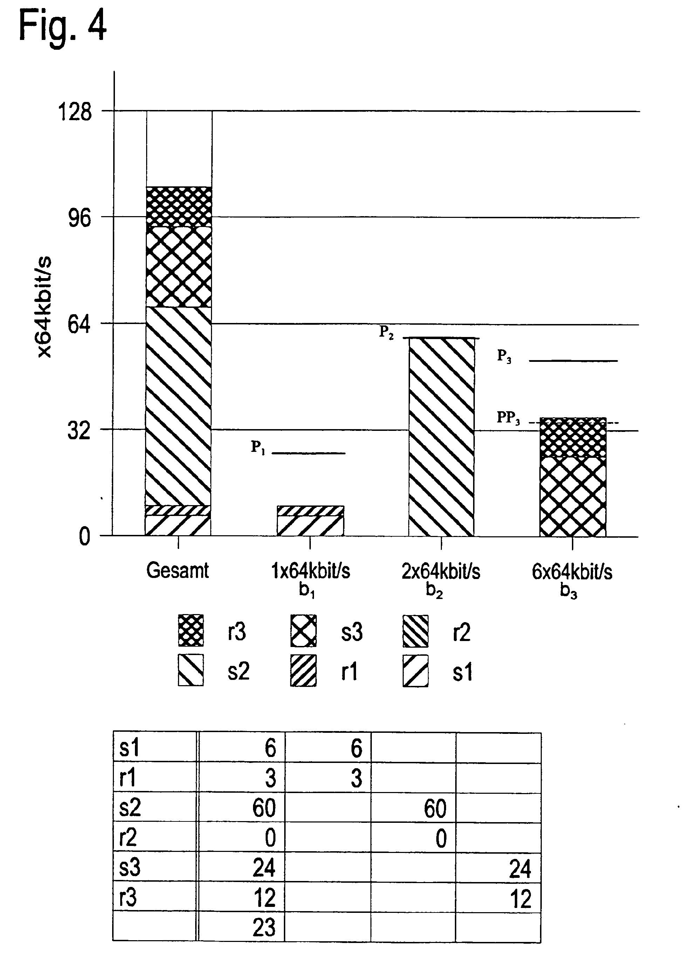

Die Figur 3 zeigt eine Lastsituation des Datenübertragungsnetzes, bei der in der Bandbreite b₂ schon ein Datenverkehrsaufkommen herrscht, das kurz unterhalb der Schwelle p₂ liegt. Wird nun eine weitere Anforderung zur Datenübertragung für diese Bandbreite b₂ gestellt, so ergibt sich erfindungsgemäß eine Situation, die in Figur 4 dargestellt ist. Die Anforderung für b₂ wurde hier zwar angenommen, da die Größe der gesamten nicht genutzten Datenübertragungskapazität größer ist als die Summe der reservierten Datenübertragungskapazitäten r₁ und r₃ der anderen Bandbreiten. Jedoch wird, da die Schwelle p₂ für b₂ überschritten wurde, die Auflösung der reservierten Datenübertragungskapazität r₂ bewirkt und somit zusätzliche frei verfügbare Datenübertragungskapazität freigesetzt.

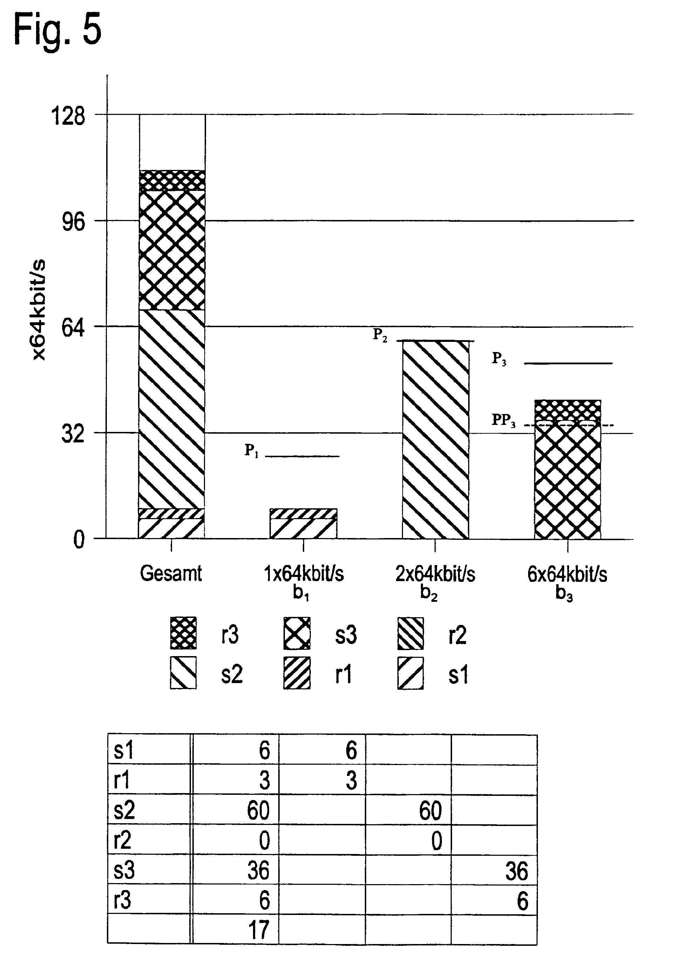

In der Figur 5 ist schließlich anhand der Bandbreite b₃ gezeigt, welche Auswirkung das Überschreiten des zweiten Schwellwertes pp₃ - falls ein derartiger Schwellwert bestimmt ist - für die reservierte Datenübertragungskapazität r₃ hat. Beim Überschreiten dieses Schwellwertes pp₃, wie er in dieser Figur gezeigt ist, reduziert sich die reservierte Datenübertragungskapazität r₃ um einen bestimmten Faktor, hier um die Hälfte. Durch diese Reduktion der reservierten Kapazitäten erhöht sich der frei verfügbare Bereich entsprechend und stellt in Hochlastsituationen etwas mehr freie Datenübertragungskapazität für alle Bandbreiten zur Verfügung.

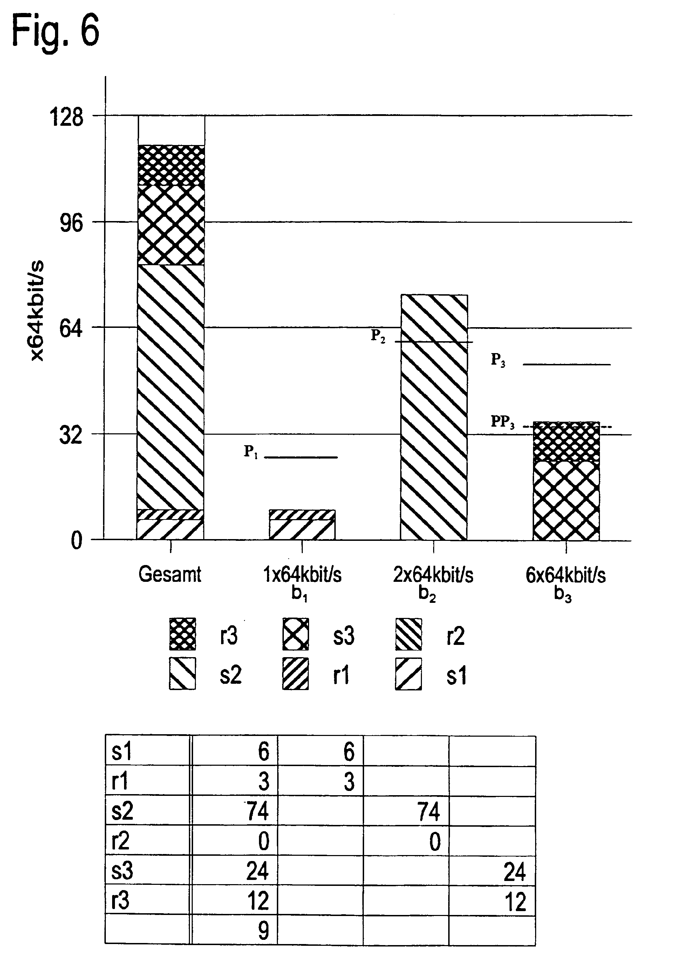

Obwohl in den Figuren 3-5 die Lastsituation des Datenübertragungsnetzes schon relativ hoch und teilweise die Reservierungen für Datenübertragungskapazität aufgehoben ist, können jedoch für alle Bandbreiten noch Anforderungen zur Datenübertragung angenommen werden, da trotz der zusätzlichen Übertragung noch die nicht genutzte Kapazität des Datenübertragungsnetzes größer als die reservierten Kapazitäten der jeweils anderen Bandbreiten bleibt. Diese Situation ändert sich jedoch bei einer Lastsituation, wie sie in der Figur 6 gezeigt ist. Hier ist die Last auf den Bandbreiten b₁ und b₃ so gering, daß die Reservierungen r₁ und r₃ aktiv sind. Gleichzeitig ist die Belastung durch die Bandbreite b₂ so groß, daß hier keine Reservierung mehr besteht. Außerdem ist durch die starke Auslastung die freie Datenübertragungskapazität stark geschrumpft.

Entsprechend dem Erfindungsgedanken wird unter dieser Lastsituation eine Anforderung für eine weitere Datenübertragung mit der Bandbreite b₂ abgelehnt, da nach einer gedachten Annahme der Anforderung die Summe aus r₁ und r₃ größer als die dann noch verbleibende, nicht genutzte Kapazität wäre.

Eine andere Anforderung für eine weitere Datenübertragung mit der Bandbreite b₁ würde angenommen werden, da nach einer gedachten Annahme dieser Anforderung die Summe aus r₂ und r₃ - wobei r₂ den Wert 0 hat, da diese Reservierung bereits aufgehoben ist - kleiner als die dann noch verbleibende, nicht genutzte Kapazität wäre. Ebenfalls würde eine mögliche Anforderung zur Datenübertragung mit der Bandbreite b₃ aufgrund der gleichen Kriterien angenommen werden.

Insgesamt wird also durch das erfindungsgemäße Verfahren beziehungsweise auch durch eine, mit Mitteln zur Durchführung dieses Verfahrens ausgestattete Vermittlungsstelle, erreicht, daß das Datenübertragungsnetz effektiv und mit geringer Blockierungswahrscheinlichkeit auch am Rande seiner Auslegungskapazität arbeitet, flexibel auf unterschiedliche Lastanforderungen unterschiedlicher Bandbreiten reagiert, sich stabil bei kleinen Abweichungen gegenüber seiner Auslegungskapazität verhält, bei großer Überlast einer Bandbreite keine Blockierung anderer Bandbreiten auslöst, sowohl Bandbreiten unterschiedlicher Größe annähernd chancengleich behandelt, sich also "fair" verhält und schließlich aufgrund des einfachen Algorithmus eine sehr einfache Verwaltung des Datenverkehrs erlaubt.

## Patentansprüche

1. Verfahren zur Reservierung von Übertragungskapazitäten und zur Auswahl von Anforderungen für zu übertragende Datenströme unterschiedlicher Bandbreite in digitalen Datenübertragungsnetzen mit einer maximalen Übertragungsrate bₘₐₓ, wobei
1.1 eine bestimmte Übertragungskapazität zur Verfügung steht, die kleiner oder gleich der maximalen Übertragungsrate bₘₐₓ ist,
1.2 bestimmte Bandbreiten oder Bandbreitengruppen bᵢ Datenübertragungsraten sᵢ in Benutzung haben,
1.3 für bestimmte Bandbreiten oder Bandbreitengruppen bᵢ bestimmte Datenübertragungsraten rᵢ reserviert werden,
1.4 eine Anforderung zur Übertragung von Daten mit einer bestimmten Bandbreite oder Bandbreitengruppe bⱼ nur dann angenommen wird, wenn vorgegebene Kriterien bezüglich der Auslastung des Datennetzes erfüllt werden, und
1.5 eine Anforderung zur Übertragung von Daten mit einer bestimmten Bandbreite bⱼ nur dann angenommen wird, wenn die nicht genutzte Datenübertragungskapazität auch nach der Annahme der Übertragung größer oder gleich der Summe der reservierten Datenübertragungsraten mit Ausnahme der reservierten Datenübertragungsrate rⱼ für die anfordernde Bandbreite oder Bandbreitengruppe bⱼ ist, **dadurch gekennzeichnet, daß** die folgenden Verfahrensschritte enthalten sind:
1.6 für n Bandbreiten oder Bandbreitengruppen bᵢ - mit i= 1 bis n - werden bestimmte Datenübertragungsraten rᵢ - mit i= 1 bis n - reserviert,
1.7 es werden Schwellenwerte pᵢ - mit i= 1 bis n - für jede bestimmte Bandbreite oder Bandbreitengruppe bᵢ festgelegt,
1.8 es wird die Belastung sᵢ des Datenübertragungsnetzes bezüglich der einzelnen Bandbreiten bᵢ beobachtet, wobei
1.9 bei einer Überschreitung einer Belastung sⱼ des Schwellwertes pⱼ - mit j Element der Werte i - der Bandbreite oder Bandbreitengruppe bⱼ die Reservierung von Datenübertragungsraten rⱼ für diese Bandbreite oder Bandbreitengruppe bⱼ aufgehoben wird, und
1.10 die Anforderung zur Übertragung von Daten mit dieser bestimmten Bandbreite oder Bandbreitengruppe bⱼ nur dann akzeptiert wird, wenn die dann zur Verfügung stehende nicht belegte Datenübertragungskapazität auch nach der Annahme der Anforderung noch alle Reservierungen rₖ - mit k = 1 bis j-1 und j+1 bis n - aller übrigen Bandbreiten oder Bandbreitengruppen bₖ mit nicht aufgehobenen Reservierungen erfüllen kann.

2. Verfahren gemäß dem Anspruch 1, **dadurch gekennzeichnet, daß** die reservierten Datenübertragungsraten rᵢ ganzzahlige Vielfache - mit rᵢ=n*bi und n=0,1,2,... - der jeweiligen Bandbreiten oder der größten Bandbreite der jeweiligen Bandbreitengruppe bᵢ sind.

3. Verfahren gemäß einem der Ansprüche 1-2, **dadurch gekennzeichnet, daß** im Falle des Akzeptierens einer Anforderung zur Übertragung von Daten mit dieser bestimmten Bandbreite oder Bandbreitengruppe bⱼ der reservierte Bereich der Datenübertragungsrate rⱼ besetzt oder teilbesetzt wird, wenn keine sonstige freie Datenübertragungskapazität mehr vorhanden ist.

4. Verfahren gemäß Anspruch 3, **dadurch gekennzeichnet, daß** im Falle der vollständigen Nutzung einer reservierten Datenübertragungskapazität rⱼ keine weiteren Anforderungen zur Übertragung von Daten mit dieser Bandbreite oder Bandbreitengruppe bⱼ akzeptiert werden.

5. Verfahren gemäß einem der Ansprüche 1-4, **dadurch gekennzeichnet, daß** zumindest für eine Bandbreite bᵢ ein zweiter Schwellenwert ppᵢ bestimmt wird, der kleiner als der erste Schwellenwert pᵢ ist, und bei Erreichen dieses Schwellenwertes ppᵢ der genutzten Datenübertragungslast sᵢ der Wert der reservierten Datenübertragungskapazität rᵢ reduziert wird.

6. Verfahren gemäß einem der Ansprüche 1-5, **dadurch gekennzeichnet, daß** die Bandbreiten bᵢ ganzzahlige Vielfache von 64kbit/s sind.

7. Verfahren gemäß einem der Ansprüche 1-6, **dadurch gekennzeichnet, daß** das Datenübertragungsnetz ein digitales Telekommunikationsnetz, insbesondere ein ISDN-Netz ist.

8. Verfahren gemäß einem der Ansprüche 1-6, **dadurch gekennzeichnet, daß** das Datenübertragungsnetz ein digitales Mobilfunknetz ist.

9. Verfahren gemäß einem der Ansprüche 1-6, **dadurch gekennzeichnet, daß** das Datenübertragungsnetz ein ATM-Netz ist.

10. Datenvermittlungsstelle, **dadurch gekennzeichnet, daß** sie Mittel zur Durchführung aller Schritte des Verfahrens gemäß einem der Ansprüche 1-9 aufweist .

## Claims

1. Method for reserving transmission capacities and for selecting requests for data streams of different bandwidth to be transmitted in digital data transmission networks having a maximum transmission rate bₘₐₓ,
1.1 a particular transmission capacity being available which is less than or equal to the maximum transmission rate bₘₐₓ,
1.2 certain bandwidths or bandwidth groups bᵢ having data transmission rates sᵢ in use,
1.3 certain data transmission rates rᵢ being reserved for certain bandwidths or bandwidth groups bᵢ, and
1.4 a request for transmitting data having a particular bandwidth or bandwidth group bⱼ only being accepted if predetermined criteria with respect to the utilization of the data network are met, and
1.5 a request for transmitting data having a certain bandwidth bⱼ is accepted only if the unused data transmission capacity is greater than or equal to the sum of the reserved data transmission rates, with the exception of the reserved data transmission rate rⱼ for the requesting bandwidth or bandwidth group bⱼ, even after the transmission has been accepted,
**characterized in that** the following method steps are included:
1.6 particular data transmission rates rᵢ - with i = 1 to n - are reserved for n bandwidths or bandwidth groups bᵢ - with i = 1 to n - ,
1.7 threshold values pᵢ - with i = 1 to n - are established for each particular bandwidth or bandwidth group bᵢ,
1.8 the loading sᵢ of the data transmission network with respect to the individual bandwidths bᵢ is observed, and,
1.9 when a loading sⱼ of the threshold value pⱼ - with j element of values i - of the bandwidth or bandwidth group bⱼ is exceeded, the reservation of data transmission rates rⱼ is cancelled for this bandwidth or bandwidth group bⱼ, and
1.10 the request for transmitting data having this particular bandwidth or bandwidth group bⱼ is only accepted if the unoccupied data transmission capacity then available can still meet all reservations rₖ - with k = 1 to j - 1 and j + 1 to n - of all remaining bandwidths or bandwidth groups bₖ with uncanceled reservations even after the request has been accepted.

2. Method according to Claim 1, **characterized in that** the reserved data transmission rates rᵢ are integral multiples - with rᵢ = n * bi and n = 0, 1, 2, ... - of the respective bandwidths or of the largest bandwidth of the respective bandwidth group bᵢ.

3. Method according to one of Claims 1-2, **characterized in that**, in the case of an acceptance of a request for transmission of data having this particular bandwidth or bandwidth group bⱼ, the reserved area of the data transmission rate rⱼ is occupied or partially occupied if there is no other free data transmission capacity available any more.

4. Method according to Claim 3, **characterized in that**, in the case of complete utilization of a reserved data transmission capacity rⱼ, no further requests for transmitting data having this bandwidth or bandwidth group bⱼ are accepted.

5. Method according to one of Claims 1-4, **characterized in that** a second threshold value ppᵢ which is smaller than the first threshold value pᵢ is determined at least for a bandwidth bᵢ, and when this threshold value ppᵢ of the data transmission load sᵢ utilized is reached, the value of the reserve data transmission capacity rᵢ is reduced.

6. Method according to one of Claims 1-5, **characterized in that** the bandwidths bᵢ are integral multiples of 64 kbit/s.

7. Method according to one of Claims 1-6, **characterized in that** the data transmission network is a digital telecommunication network, especially an ISDN network.

8. Method according to one of Claims 1-6, **characterized in that** the data transmission network is a digital mobile radio network.

9. Method according to one of Claims 1-6, **characterized in that** the data transmission network is an ATM network.

10. Data switching center, **characterized in that** it exhibits means for carrying out all the steps of the method according to one of Claims 1-9.

## Revendications

1. Procédé de réservation de capacités de transmission et de sélection de requêtes pour des flux de données de largeur de bande différente à transmettre, dans des réseaux de transmission de données numériques avec un débit de transmission maximal bₘₐₓ,
1.1 une capacité de transmission déterminée étant disponible, laquelle est inférieure ou égale au débit de transmission maximal bₘₐₓ,
1.2 des largeurs de bande ou groupes de largeurs de bande déterminés bᵢ ayant des débits de transmission de données sᵢ en cours d'utilisation,
1.3 des débits de transmission de données déterminés rᵢ étant réservés pour des largeurs de bande ou groupes de largeurs de bande déterminés bᵢ,
1.4 une requête de transmission de données avec une largeur de bande ou un groupe de largeurs de bande déterminés bⱼ n'étant acceptée que si des critères prédéterminés concernant le taux d'utilisation du réseau de données sont remplis et
1.5 une requête de transmission de données avec une largeur de bande déterminée bⱼ n'étant acceptée que si la capacité de transmission de données non utilisée, même après l'acceptation de la transmission, est supérieure ou égale à la somme des débits de transmission de données réservés, à l'exception du débit de transmission de données réservé rⱼ pour la largeur de bande ou le groupe de largeurs de bande requérants bⱼ, **caractérisé en ce que** les étapes de procédé suivantes sont incluses:
1.6 pour n largeurs de bande ou groupes de largeurs de bande bᵢ, avec i = 1 à n, des débits de données déterminés rᵢ, avec i = 1 à n, sont réservés,
1.7 des valeurs seuil pᵢ, avec i = 1 à n, sont déterminées pour chaque largeur de bande ou groupe de largeur de bande déterminés bᵢ,
1.8 il y a observation de la charge sᵢ du réseau de transmission de données pour ce qui est des différentes largeurs de bande bᵢ,
1.9 étant donné un dépassement d'une charge sⱼ de la valeur seuil pⱼ, avec j étant un élément des valeurs i, de la largeur de bande ou du groupe de largeurs de bande bⱼ, la réservation de débits de transmission de données rⱼ pour cette largeur de bande ou ce groupe de largeurs de bande bⱼ étant annulée, et
1.10 la requête de transmission de données avec cette largeur de bande ou ce groupe de largeurs de bande déterminés bⱼ n'étant acceptée que si la capacité de transmission de données non occupée alors disponible, même après l'acceptation de la requête, peut encore satisfaire toutes les réservations rₖ, avec k = 1 à j-1 et j+1 à n, de toutes les autres largeurs de bande ou groupes de largeurs de bande bₖ avec des réservations non annulées.

2. Procédé selon la revendication 1, **caractérisé en ce que** les débits de transmission de données réservés rᵢ sont des multiples entiers, avec rᵢ = n*bi et n = 0, 1, 2, ..., des largeurs de bande respectives ou de la plus grande largeur de bande du groupe de largeurs de bande respectif bᵢ.

3. Procédé selon l'une des revendications 1-2, **caractérisé en ce que**, dans le cas de l'acceptation d'une requête de transmission de données avec cette largeur de bande ou ce groupe de largeurs de bande déterminés bⱼ, la plage réservée du débit de transmission de données rⱼ est occupée ou partiellement occupée lorsqu'il n'y a plus aucune autre capacité de transmission de données libre.

4. Procédé selon la revendication 3, **caractérisé en ce que**, dans le cas de l'utilisation complète d'une capacité de transmission de données réservée rⱼ, plus aucune autre requête de transmission de données avec cette largeur de bande ou ce groupe de largeurs de bande bⱼ n'est acceptée.

5. Procédé selon l'une des revendications 1 à 4, **caractérisé en ce qu'**est déterminée, au moins pour une largeur de bande bᵢ, une deuxième valeur seuil ppᵢ qui est inférieure à la première valeur seuil pᵢ et, à l'obtention de cette valeur seuil ppᵢ de la charge de transmission de données utilisée sᵢ, la valeur de la capacité de transmission de données réservée rᵢ subit une réduction.

6. Procédé selon l'une des revendications 1 à 5, **caractérisé en ce que** les largeurs de bande bᵢ sont des multiples entiers de 64 kbits/s.

7. Procédé selon l'une des revendications 1 à 6, **caractérisé en ce que** le réseau de transmission de données est un réseau de télécommunications numérique, en particulier un réseau ISDN.

8. Procédé selon l'une des revendications 1 à 6, **caractérisé en ce que** le réseau de transmission de données est un réseau radio mobile numérique.

9. Procédé selon l'une des revendications 1 à 6, **caractérisé en ce que** le réseau de transmission de données est un réseau ATM.

10. Centre de commutation de données, **caractérisé en ce qu'**il comporte des moyens permettant l'exécution de toutes les étapes du procédé selon l'une des revendications 1 à 9.
